# FASCICULE DE BREVET EUROPEEN

(11) **EP 0 467 792 B1**
(45) Date de publication et mention de la délivrance du brevet: **10.05.1995**
(21) Numéro de dépôt: 91420188.4
(22) Date de dépôt: 11.06.1991
(51) Int. Cl.: A01N 43/653, A01C 1/06

(54) **Composition fongicide pour traitement de semences**
Fungizide Zusammensetzung zur Behandlung von Saatgut
Fungicidal composition for the treatment of seeds

(30) Priorité: 13.06.1990 FR 9007607
(43) Date de publication de la demande: 22.01.1992
(73) Titulaire: RHONE-POULENC AGROCHIMIE, 69009 Lyon (FR)
(72) Inventeur: Greiner, Alfred, F-69450 St Cyr au Mont d'Or (FR); Mugnier, Jacques, F-74330 La Balme de Sillingy (FR); Hutt, Jean, F-69009 Lyon (FR); Pepin, Régis, F-69140 Rilleux le Pape (FR)
(74) Mandataire: Chretien, François

(56) Documents cités:
- EP-A- 0 052 424
- EP-A- 0 135 854
- EP-A- 0 253 714
- EP-A- 0 267 778
- EP-A- 0 274 839
- EP-A- 0 378 953
- EP-A- 0 466 612

## Description

La présente invention concerne une composition fongicide destinée notamment à la protection des produits de multiplication des végétaux cultivés contenant
(a) le 2-(4-chlorobenzylidène)-5,5-diméthyl-1-(1H-1,2,4-triazol-1-ylméthyl)-1-cyclopentanol, 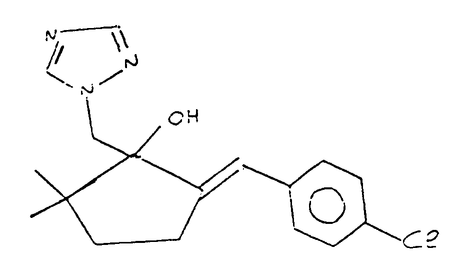
(b) un ou plusieurs fongicides convenant pour la protection desdits produits de multiplication, un support inerte convenable en agriculture et éventuellement un tensio actif convenable en agriculture.
L'invention concerne également un procédé pour protéger les produits de multiplication et les végétaux en résultant contre les maladies fongiques à l'aide d'une composition selon l'invention. Elle concerne également lesdits produits de multiplication revêtus de ladite composition.
Le 2-(4-chloro-benzylidène)-5,5-diméthyl-1-(1H-1,2,4-triazol-1-ylméthyl)-1-cyclopentanol est décrit dans la demande de brevet européen EP-A-378 953.
Ledit composé peut être obtenu de la façon suivante :

### Exemple I : Préparation de 2-(4-chlorobenzylidène) 5,5-diméthyl 1-(1H-1,2,4-triazol-1-ylméthyl)-1-cyclopentanol.

A un mélange de 10 g de 2,2-diméthyl cyclopentanone et 13,8 g de 4-chlorobenzaldehyde dans 100 ml d'éthanol à 0°C, est ajouté 100 ml d'une solution aqueuse de soude à 10 %. Après 30 minutes une épaisse bouillie était filtrée et le solide lavé puis séché. On obtient 12,5 g de 2,2-diméthyl 5-(4-chlorobenzylidène) 1-cyclopentanone de point de fusion 120°C. Ce composé dissout dans 50 ml de THF était ajouté à une solution formée de la façon suivante : 1,9 g d'hydrure de sodium (dispersion à 80 % dans l'huile minérale) dans 50 ml de DMSO anhydre est chauffée à 80°C jusqu'à dissolution totale du solide.
Puis la solution est diluée avec 100 ml de THF, puis refroidie à -10°C. On ajoute au mélange en dix minutes une solution de 11,5 g de triméthylsulfonium iodure dans 80 ml de diméthylsulfoxide et le mélange était agité pendant 15 minutes à -10°C. Une solution de 11,8 g de 2,2-diméthyl 4-chloro 5-(4-chlorobenzylidène) 1-cyclopentanone était ensuite ajoutée dans 100 ml de THF.
Le mélange ainsi produit est laissé à température ambiante puis versé dans l'eau et extrait à l'éther, lavé à l'eau, séché, distillé. On obtient le 7-(4-chlorobenzylidène) 4,4-diméthyl 1-oxaspiro (2,4) heptane directement utilisé pour l'étape suivante.
Un mélange de 5 g du produit avec 2,8 g de 1,2,4-triazole et 11 g de carbonate de potassium est chauffé dans 40 ml de N,N diméthylformamide durant 4 heures. Le mélange est versé dans l'eau, extrait à l'acétate d'éthyle. La phase organique est lavée, séchée, recristallisée pour obtenir le produit annoncé dont le point de fusion est de 143°C.
La structure du composé est très majoritairement (>95 %) celle où le groupe parachlorophényl est en position E par rapport au carbone portant le groupe hydroxy.
La 2,2-diméthylcyclopentanone peut être obtenue de manière connue dans la littérature ou est disponible sur le marché (voir fine chemical directory).
Par le terme "produit de multiplication", on entend désigner toutes les parties génératives de la plante qu'on peut utiliser pour la multiplication de celle-ci. On citera par exemple les graines (semences au sens étroit), les racines, les fruits, les tubercules, les bulbes, les rhizomes, les parties végétatives de plantes qui sont séparées de la plante. On mentionnera également les plantes germées et les jeunes plants qui doivent être transplantés après germination ou après la sortie de terre. Ces jeunes plants peuvent être protégés avant la transplantation par un traitement total ou partiel par immersion.
Pour choisir les fongicides convenant pour la protection des produits de multiplication, l'homme de métier pourra utilement se référer aux indications qui sont données dans les ouvrages de référence et qui mentionnent l'absence de phytotoxicité desdits produits. Parmi ces ouvrages, on peut citer l'index phytosanitaire édition 1990 ACTA 75595 PARIS CEDEX 12. Les compositions selon l'invention contiennent habituellement entre 0,5 et 95 % de matières actives.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...). L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est souvent requise parce que la matière active et/ou le support inerte ne sont pas solubles dans l'eau et que l'agent vecteur de l'application est l'eau.

Ces composition peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, les compositions selon l'invention peuvent être associées à tous les additifs solides ou liquides correspondant aux techniques habituelles de la mise en formulation pour application du traitement de semences notamment.

On notera à ce propos que dans le jargon des hommes de métier, le terme traitement de semences se rapporte en fait au traitement des graines.

Les techniques d'application sont bien connues de l'homme de métier et elles peuvent être utilisées sans inconvénient dans le cadre de la présente invention. On pourra citer par exemple le pelliculage ou l'enrobage.

Parmi les compositions, on peut citer de manière générale les compositions solides ou liquides.

Comme formes de compositions solides, on peut citer les poudres pour poudrage ou dispersion (à teneur en composé de formule (I) pouvant aller jusqu'à 100 %) et les granulés, notamment ceux obtenus par extrusion, par compactage, par imprégnation d'un support granulé, par granulation à partir d'une poudre (la teneur en composé de formule (I) dans ces granulés étant entre 1 et 80 % pour ces derniers cas).

Les compositions peuvent encore être utilisés sous forme de poudre pour poudrage ; on peut ainsi utiliser une composition comprenant 50 g de matière active, 10 g de silice finement divisée, 10 g de pigment organique et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes, les granulés dispersables.

Les concentrés émulsionnables ou solubles comprennent le plus souvent 10 à 80 % de matière active, les émulsions ou solutions prêtes à l'application contenant, quant à elles, 0,01 à 20 % de matière active.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précedemment cités.

A partir de ces concentrés, on peut obtenir par dilution avec de l'eau des émulsions de toute concentration désirée, qui conviennent particulièrement à l'application sur les semences.

Les suspensions concentrées, également applicables en pulvérisation, sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc...

Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les semences.

A la place des poudres mouillables, on peut réaliser des pâtes. Les conditions et modalités de réalisation et d'utilisation de ces pâtes sont semblables à celles des poudres mouillables ou poudres à pulvériser.

Les granulés dispersables sont habituellement préparés par agglomération, dans des systèmes de granulation appropriés, des compositions de type poudre mouillable.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Parmi ces compositions, l'homme de métier choisira avantageusement celle ou celles convenant selon les associations choisies.

Selon une variante préférée, la composition selon l'invention est caractérisée en ce que le rapport en poids du fongicide a) 2-(4-chlorobenzylidène)-5,5-diméthyl-1-(1H-1,2,4-triazol-1-ylméthyl)-1-cyclopentanol au fongicide(s) b) est compris entre 1/400 et 400.

Sur un plan industriel, le produit de multiplication est, de préférence, une graine pour les céréales, le maïs, le colza, le tournesol, le soja, la luzerne, le riz. Pour les pommes de terre, il peut s'agir avantageusement d'un tubercule.

Les compositions peuvent être binaires, ternaires ou quaternaires selon l'utilisation auxquelles elles sont destinées.

Selon une première variante préférée, le fongicide b) est un fongicide à spectre large choisi parmi les dérivés de l'acide dithiocarbamique dont on peut citer (selon le nom commun agréé par la British Standard Institution ou BSI ou le nom IUPAC) :
- ferbame ou iron tris (diméthyldithiocarbamate),
- zirame ou zinc bis (diméthyldithiocarbamate),
- nabame ou disodium éthylenebis (dithiocarbamate),
- zinèbe ou zinc éthylenebis (dithiocarbamate) (polymère),
- manèbe ou manganèse éthylenebis (dithiocarbamate) (polymère),
- mancopper,
- mancozèbe ou complexe de manganèse éthylene bis (dithiocarbamate) (polymère) avec un sel de zinc,
- propinèbe ou zinc propylène bis (dithiocarbamate) polymérique,
- métam - sodium,
- cuprobame,
- thirame ou tétraméthylthio disulfure,
- TMTD ou,
- carbatène ou,
- métirame, ou parmi les dérivés des dicarboximides dont on peut citer :
- captane ou N-(trichlorométhylthio) cyclohex-4-ene-1,2-dicarboximide,
- folpel ou N-(trichlorométhylthio) phtalimide,
- captafol ou N-(1,1,2,2-tétrachloroéthylthio) cyclohex-4-ene-1,2-dicarboximide,
- ditalimphos ou,
- iprodione ou 3-(3,5-dichlorophényl)-N-isopropyl-2,4-dioxoimidazolidine-1-carboxamide,
- procymidone ou N-(3,5-dichlorophényl)-1,2-diméthylcyclopropane-1,2-dicarboximide,
- vinchlozoline ou (RS)-3-(3,5-dichlorophényl)-5-méthyl-5-vinyl-1,3-oxazolidine-2,4-dione.

Parmi ces dérivés sont préférés les fongicides à spectre large suivants : captane, thirame, manèbe.

Selon une seconde variante préférée, prise éventuellement en combinaison avec la première variante lorsque le fongicide b) est un mélange, le fongicide b) est un fongicide à activité anti fusarium, de préférence choisi parmi les imidazoles dont on peut citer :
- prochloraz ou N-propyl-N-[2-(2,4,6-trichlorophénoxy) éthyl] imidazole-1-carboxamide,
- imazalyl ou allyl-1-(2,4-dichlorophényl)-2-imidazol-1-yléthyl éther, ou parmi les carbamates dont on peut citer :
- benomyl ou méthyl 1-(butylcarbamoyl) benzimidazol-2-yl carbamate,
- thiabendazole ou 2-(thiazol-4-yl) benzimidazole,
- carbendazime ou méthyl benzimidazol-2-ylcarbamate, ou parmi les pyroles dont on peut citer :
- le fenpiclonil ou 4-(2,3-dichlorophényl) pyrrole-3-carbonitrile ou encore l'oxyquinoléate de cuivre.

Selon une troisième variante préférée, prise éventuellement en combinaison avec l'une des deux premières variantes ou les deux lorsque b) est un mélange, le fongicide b) est à activité anti Rhizoctonia, de préférence choisi parmi les dicarboximides dont on peut citer :
- iprodione,
   ou des phénylurées dont on peut citer :
- pencycuron ou 1-(4-chlorobenzyl)-1-cyclopentyl-3-phényluffrée,
   ou des anilides dont on peut citer :
- mépronil,
- flutolanil ou ⁻,⁻,⁻-trifluoro-3'-isopropoxy-0-toluanilide,
   ou les dérivés du phosphore comme le Tolclophos-méthyl ou 0-2,6-dichloro-p-tolyl 0,0-diméthylphosphorothioate.

Selon une quatrième variante préférée, prise ou non en combinaison avec l'une ou deux des trois premières ou les trois, le fongicide b) est un fongicide à activité anti oomycètes, de préférence choisi parmi les acylalanines :
- benalaxyl ou méthyl N-phénylacétyl-N-2,6-xylyl-DL-alaninate,
- furalaxyl ou méthyl N-(2-furoyl)-N-(2,6-xylyl)-DL-alaninate,
- métalaxyl ou méthyl N-(2-méthoxyacétyl)-N-(2,6-xylyl)-DL-alaninate,
- oxadixyl ou 2-méthoxy-N-(2-oxo-1,3-oxazolidin-3-yl) acet-2',6'-xylidide.
   les thiadiazoles dont on peut citer :
- l'étridiazole ou éthyl 3-trichlorométhyl-1,2,4-thiadiazol-5-yl éther,
   les isoxazoles dont on peut citer :
- l'hymexazol ou 5-méthylisoxazol-3-ol, les monoéthylphosphites métalliques dont on peut citer :
- le phoséthyl-Al ou aluminium éthyl hydrogen phosphonate,
- l'acide phosphoreux ou ses sels de potassium ou calcium.

Selon une cinquième variante préférée, prise ou non en combinaison avec l'une ou deux ou trois des quatres premières ou les quatres, le fongicide b) est un fongicide à activité anti-oïdium, de préférence choisi parmi :
les morpholines à dose non phytotoxique :
- la fenpropidine ou (RS)-1-[3-(4-tert-butylphényl)-2-méthylpropyl] piperidine,
- le fenpropimorphe ou (I)-cis-4-[3-(4-tert-butylphényl) -2-méthylpropyl]-2,6-diméthylmorpholine,
- le tridémorphe ou 2,6-diméthyl-4-tridécylmorpholine,
- le 4-[3-(4-chlorophénoxyphényl)-2-méthylpropyl]-2,6-diméthylmorpholine décrit dans EP-A-262870 du 24 septembre 1987 ;
   les pyrimidines comme :
- l'ethyrimol ou 5-butyl-2-éthylamino-6-méthyl pyrimidin-4-ol.

Selon une sixième variante prise ou non en combinaison avec l'une ou plusieurs des cinq premières, le fongicide b) est un fongicide à activité anti-helmintosporium ou anticarie, charbon, antiseptoriose, de préférence choisi parmi :
- le triazoxide,
- le fenfuram ou 2-méthyl-3-furanilide,
- la carboxine ou 5-6, -dihydro-2-méthyl-1,4-oxathi-ine-3-carboxanilide,
- la guazatine,
- le dodécylbenzène sulfonate d'iminoctadine,
- l'ampropylfos ou 1-aminopropylphosphonic acid.

L'invention a également pour objet une composition fongicide telle que décrite ci-avant contenant en outre un ou plusieurs insecticides c) convenant pour la protection des produits de multiplication.

Parmi ceux-ci on peut citer : tefluthrin, cypermethrin, thiodicarb, lindane, furathiocarb, acephate, butocarboxim, carbofuran, NTN, endosulfan, diethion, aldoxycarb, méthiocarb, "oftanol" (isofenfos), chlorpyrifos, bendiocarb, benfuracarb, oxamyl, parathion, capfos, dimethoate, fenefos, chlorfenvinphos, cartap, fenthion, fenitrothion, HCH, deltaméthrine, malathion, diazinon, dioulfoton.

Les compositions selon l'invention peuvent être utilisées pour la protection tant préventive que curative des produits de multiplication des végétaux contre les champignons, notamment de type basidiomycètes, ascomycètes, adelomycètes ou fungi-imperfecti, en particulier les rouilles, les caries, les oïdium, le piétin-verse, les fusarioses, fusarium roseum, fusarium nivale, helminthosporioses, rhynchosporioses, septorioses, rhizoctones des végétaux et des plantes en général et en particulier des céréales telles que le blé, l'orge, le seigle, l'avoine et leurs hybrides et aussi le riz et le maïs.

Les compositions selon l'invention sont actives en particulier contre les champignons notamment de type basidiomycètes, ascomycètes, adelomycètes ou fungi-imperfecti comme Botrytis cinerea, Erysiphe graminis, Puccinia graminis, Puccinia recondita, Piricularia oryzae, Cercospora beticola, Puccinia striiformis, Erysiphe cichoracearum, Rhinchosporium secalis, Fusarium, Solani, Fusarium oxysporum (melonis par exemple), Pyrenophora avenae, Septoria tritici, Septoria avenae, Whetzelinia sclerotiorum, Mycosphaerella fijiensis, Alternaria solani, Aspergillus niger, Cercospora arachidicola, Cladosporium herbarum, Tilletia caries, Tilletia contreversa, Fusarium roseum, Fusarium nivale, Helminthosporium oryzae, Helminthosporium teres, Helminthosporium gramineum, Helminthosporium sativum, Penicillium expansum, Pestalozzia sp, Phoma betae, Phoma foveata, Phoma lingam, Ustilago maydis, Ustilago nuda, Ustilago hordei, Ustilago avenae, Verticillium dahliae, Ascochyta pisi, Guignardia bidwellii, Corticium rolfsii, Phomopsis viticola, Sclerotinia sclerotiorum, Sclerotinia minor, Coryneum cardinale, Rhizoctonia solani, Acrostalagmus koningi, les Alternaria, les Colletotrichum, Corticium rolfsii, Diplodia natalensis, Gaeumannomyces graminis, Gibberella fujikuroi, Hormodendron cladosporioides, Myrothecium verrucaria, Paecylomyces varioti, Pellicularia sasakii, Phellinus megaloporus, Sclerotium rolfsii, Stachybotris atra, Trichoderma pseudokoningi, Trichothecium roseum.

Les compositions de l'invention sont spécialement intéressantes par leur spectre large au niveau des maladies des céréales (oïdium, rouille, piétin-verse, rhinchosporiose, helminthosporioses, septorioses et fusarioses). Elles présentent également un grand intérêt en raison de leur activité sur la pourriture grise (Botrytis) et les cercosporioses, et, de ce fait, elles peuvent être appliquées sur des produits de multiplication de cultures aussi variées que la vigne, les cultures maraîchères et l'arboriculture et les cultures tropicales telles que l'arachide, le bananier, le caféier, la noix de pécan et d'autres.

Ces compositions sont également utiles dans le cadre de la désinfection des semences de céréales contre Ustilago nuda, Septoria nodorum, Tillatia caries et Tilletia controversa, Helminthosporium gramineum et de nombreuses espèces de Fusarium sp.

L'invention a également pour objet les mélanges du fongicide a) et d'un ou plusieurs fongicides b) éventuellement un ou plusieurs insecticides c) avec leurs variantes préférées telles qu'elles viennent d'être décrites précédemment.

Ces mélanges étant utiles dans la mise en oeuvre des compositions fongicides selon l'invention.

L'invention a également pour objet une méthode pour protéger les produits de multiplication des végétaux et les végétaux en résultant contre les maladies fongiques, caractérisée en ce que l'on recouvre lesdits produits de multiplication d'une composition, fongicide et non phytotoxique, selon l'invention.

Comme cela a été indiqué précédemment, les procédés de recouvrement sont bien connus dans l'art et font appel pour les semences aux techniques de pelliculage ou d'enrobage ou pour les produits de multiplication autres, aux techniques d'immersion.

L'invention s'est révélée paticulièrement avantageuse pour protéger les graines. Parmi ces graines, on peut citer les graines de céréales (orge, blé, seigle, avoine, triticale), le maïs, le riz.

De préférence, on recouvre ladite graine de 1 à 400 g de fongicide a) et 1 à 400 g de fongicide b) par 100 kg (= 1 quintal) de semences.

Néanmoins dans ces intervalles, l'homme de métier choisira au moyen de ses connaissances générales, et éventuellement de quelques tâtonnements, les doses non phytotoxiques mais efficaces sur le plan fongicide.

De même, lorsque la composition contient un ou plusieurs insecticides, ceux-ci devront être appliqués à des doses non phytotoxiques bien connues de l'homme de métier.

De même, l'invention a également pour objet le produit de multiplication des végétaux recouvert d'une composition selon l'invention avec les variantes préférées sus indiquées.

De préférence, les produits sont des graines qui sont avantageusement recouvertes de 1 à 400 g de fongicide a) et 1 à 400 g de fongicide b) par 100 kg (= 1 quintal) de semences.

L'invention est illustrée par les exemples indiqués ci-après.

### Essai in vivo par application traitement de semences :

### Bouillie d'application :

On prépare par broyage fin une dispersion aqueuse du mélange de matière active à tester ayant la composition suivante :
- matière active ou mélange de matière active (a et/ou b),
- Tween 80 (agent tensio-actif) constitué d'un oléate de dérivé polyoxyéthylèné du sorbitan dilué à 10 % dans l'eau,
- on complète à 60 ml d'eau.

Cette dispersion aqueuse est ensuite diluée par de l'eau pour obtenir la concentration désirée.

### Sur Pythium arrhenomanes :

Des graines d'orge variété Robbin, inoculées artificiellement par Pythium arrhenomanes sont traitées avec la bouillie ci-avant définie aux doses indiquées dans le tableau ci-dessous.

20 graines sont déposées dans des pots de 10 cm X 10 cm contenant un mélange de tourbe : pouzzolane (1:1).

Les plantules se développent et 15 jours après le semis, on constate l'état de celles-ci par comparaison avec le témoin où se sont développées des colonies de Pythium arrhenomanes.

Les résultats ci-dessous sont donnés pour une moyenne de 40 plantes (2 pots).

Remarques : dans les tableaux subséquents, le fongicide a) est désigné par la lettre a 1 quintal = 100 kg.

| | dose g/quintal | % efficacité |
|---|---|---|
| manèbe | 250 | 38 |
| captane | 160 | 97 |
| thirame | 160 | 100 |
| a + thirame | 100 + 160 | 100 |
| a + captane | 100 + 160 | 90 |
| a + manèbe | 100 + 250 | 77 |
| a | 100 | 0 |

Aucun effet de phytotoxicité n'est constaté.

### Sur Fusarium culmorum :

Des graines d'orge variété Robbin, naturellement contaminées par Fusarium culmorum sont traitées avec une bouillie ci-avant définie aux doses indiquées dans le tableau ci-dessous et plantées comme indiqué à l'essai précédent.

15 jours après le semis, on contrôle l'état des plantules par comparaison avec le témoin non traité où se sont développées des colonies de Fusarium culmorum.

Les résultats ci-dessous sont donnés pour une moyenne de quarante plantes (2 pots).

| | dose g/quintal | % efficacité |
|---|---|---|
| thiabendazole | 50 | 100 |
| imazalil | 5 | 100 |
| benomyl | 100 | 100 |
| prochloraz | 50 | 100 |
| a + thiabenzazole | 25 + 50 | 100 |
| a + imazalil | 25 + 5 | 100 |
| a + prochloraz | 25 + 50 | 100 |
| a | 25 | 100 |

Aucune phytotoxicité n'est constatée.

### Sur Rhizoctonia solani :

Les essais sont effectués de la même façon que précédemment et conduisent aux résultats indiqués dans le tableau ci-dessous.

| | dose g/quintal | % efficacité |
|---|---|---|
| flutolanil | 200 | 70 |
| mépronil | 500 | 55 |
| iprodione | 400 | 71 |
| pencycuron | 400 | 55 |
| a + flutolanil | 100 + 200 | 82 |
| a + mépronil | 100 + 500 | 73 |
| a + iprodione | 100 + 400 | 70 |
| a + pencycuron | 100 + 400 | 72 |
| a | 100 | 70 |

Aucune phytotoxicité n'est constatée.

### Sur Pythium arrhenomanes :

Les essais sont effectués de la même façon que précédemment et conduisent aux résultats indiqués dans le tableau ci-dessous.

| | dose g/quintal | % efficacité |
|---|---|---|
| benalaxyl | 150 | 93 |
| furalaxyl | 150 | 98 |
| étridiazole | 150 | 98 |
| phoséthyl Al | 300 | 80 |
| métalaxyl | 120 | 90 |
| hymexazol | 300 | 37 |
| a + benalaxyl | 100 + 150 | 95 |
| a + furalaxyl | 100 + 150 | 97 |
| a+étridiazole | 100 + 150 | 93 |
| a+phoséthyl Al | 100 + 300 | 80 |
| a + métalaxyl | 100 + 120 | 93 |
| a + hymexazol | 100 + 300 | 32 |
| a | 100 | 0 |

Aucune phytotoxicité n'est constatée.

### Association phosphite (K₂HPO₄) et fongicide a :

Des graines d'orge recouverts de la bouillie ci-avant définie sont semés en champs à raison de 120 kg de graines par hectare.

La lecture est effectuée par rapport à un témoin non traité au moment de la germination auquel on attribue le chiffre 100.

L'effet biologique est observé par comptage des plantes levées et exprimé dans le tableau ci-dessous (q = quintal, 1 quintal = 100 kg) :

| Traitement g/q | % de plantes levées par rapport au témoin |
|---|---|
| temoin | 100 |
| fongicide a 25 + phosphite 200 | 126 |
| fongicide a 25 + phosphite 40 | 142 |

A 79 jours, on arrache les plantes et on compte le nombre de racines par plantes sur une moyenne de 20 plantes.

| Traitement g/q | Nombre des racines par plantes |
|---|---|
| temoin | 0,8 |
| fongicide a 25 + phosphite 200 | 5,8 |
| fongicide a 25 + phosphite 40 | 5,5 |

Au 156^{ème} jour, on arrache les plantes et on pèse les racines.

| Traitement g/q moyenne de 20 plantes | Poids des racines par plantes en mg * |
|---|---|
| temoin | 74,7 |
| fongicide a 25 + phosphite 200 | 105,5 |
| fongicide a 25 + phosphite 40 | 106 |

| | |
|---|---|
| * moyenne de 20 plantes | |

Ainsi on constate que l'association favorise l'enracinement, évite la fonte des semis et favorise la croissance des céréales.

## Revendications

1. Composition fongicide destinée notamment à la protection des produits de multiplication des végétaux cultivés contenant (a) le 2-(4-chlorobenzylidène)-5,5-diméthyl-1-(1H-1,2,4-triazol-1-ylméthyl)-1-cyclopentanol, (b) un ou plusieurs fongicides convenant pour la protection desdits produits de multiplication, un support inerte convenable en agriculture et éventuellement un tensio actif convenable en agriculture.

2. Composition selon la revendication 1, caractérisée en ce que le produit de multiplication est une graine.

3. Composition selon la revendication 1, caractérisée en ce que le rapport en poids du fongicide a) 2-(4-chlorobenzylidène)-5,5-diméthyl-1-(1H-1,2,4-triazol-1-ylméthyl)-1-cyclopentanol au fongicide(s) b) est compris entre 1/400 et 400.

4. Composition selon l'une des revendications 1,2 ou 3, caractérisée en ce que le fongicide b) est un fongicide à spectre large de la famille des dérivés de l'acide dithiocarbamique ou des dicarboximides.

5. Composition selon la revendication 4, caractérisée en ce que le fongicide est choisi parmi le captane ou thirame ou manèbe.

6. Composition selon l'une des revendications 1,2 ou 3, caractérisée en ce que le fongicide b) est un fongicide anti-fusarium.

7. Composition selon la revendication 6, caractérisée en ce que le fongicide est choisi parmi le thiabendazole, l'imidazol, le benomyl, le prochloraz, le carbendazime, le fenpiclonile, l'imazalyl.

8. Composition selon l'une des revendications 1, 2 ou 3, caractérisée en ce que le fongicide b) est un fongicide anti-rhizoctonia.

9. Composition selon la revendication 8, caractérisée en ce que le fongicide b) est choisi parmi le fluotolanil, mepronil, iprodione, pencycuron ou le tolclophos-méthyl.

10. Composition selon l'une des revendications 1, 2 ou 3, caractérisée en ce que le fongicide b) est un fongicide anti-oomycètes.

11. Composition selon la revendication 10, caractérisée en ce que le fongicide est choisi parmi le benalaxyl, furalaxyl, l'oxadixyl, étridiazole, phosethyl Al, netalaxyl, hymexazol, l'acide phosphoreux ou un de ses sels de calcium ou de potassium.

12. Composition selon l'une des revendications 1, 2 ou 3, caractérisée en ce que le fongicide b) est un fongicide anti-helmin thosporium, anticarie, charbon, antiseptoriose, anti Fusarium.

13. Composition selon la revendication 12, caractérisée en ce que le foncicide b) est le triazoxide, le fenfuram, la guazatine, le dodécylbenzènesulfonate d'iminoctadine, l'ampropylfos.

14. Composition selon l'une des revendications 1, 2 ou 3, caractérisée en ce que le fongicide b) est un fongicide anti-oïdium.

15. Composition selon la revendication 14, caractérisée en ce que le fongicide b) est l'ethirimol, le fenpropidine, le fenpropimorphe, le tridémorphe, le 4-[3-(4-chlorophénoxyphényl)-2-méthylpropyl]-2,6 diméthylmorpholine.

16. Composition selon l'une des revendications 1 à 15, caractérisée en ce qu'elle contient en outre un ou plusieurs insecticides c) convenables pour la protection des produits de multiplication.

17. Méthode pour protéger les produits de multiplication (à l'exception des plantes germées et des jeunes plants) et les végétaux en résultant contre les maladies fongiques, caractérisée en ce que l'on recouvre lesdits produits de multiplication d'une quantité fongicide et non phytotoxique d'une composition selon l'une des revendications 1 à 16.

18. Méthode selon la revendication 17, caractérisée en ce que le produit de multiplication est une graine.

19. Méthode selon la revendication 17, caractérisée en ce que ladite graine est recouverte à raison de 1 à 400 g de fongicide a) et 1 à 400 g de fongicide b) par quintal de semences.

20. Produit résultant de l'association du fongicide a) qui est le 2-(4-chlorobenzylidène)-5,5-diméthyl-1-(1H-1,2,4-triazol-1-ylméthyl)-1-cyclopentanol et un ou plusieurs fongicides b) et éventuellement un ou plusieurs insecticides c) comme aux revendications 1 à 16.

21. Produit de multiplication des végétaux traité par une méthode selon l'une des revendications 17 à 19.

22. Produit de multipîication, selon la revendication 21, caractérisé en ce que c'est une graine.

23. Produit de multiplication selon la revendication 22, caractérisé en ce qu'il comprend 1 à 400 g de fongicide a) et 1 à 400 g de fongicide b) par quintal de semences.

## Claims

1. Fungicidal composition intended, in particular, for the protection of the multiplication products of cultivated plants, containing (a) 2-(4-chloro-benzylidene)-5,5-dimethyl-1-(1H-1,2,4-triazol-1-yl-methyl)-1-cyclopentanol, (b) one or more fungicides suitable for the protection of the said multiplication products, an agriculturally acceptable inert vehicle and optionally an agriculturally acceptable surfactant.

2. Composition according to claim 1, characterized in that the multiplication product is a seed.

3. Composition according to claim 1, characterized in that the weight ratio of the fungicide a) 2-(4-chlorobenzylidene)-5,5-dimethyl-1-(1H-1,2,4-triazol-1-yl-methyl)-1-cyclopentanol to the fungicide(s) b) is between 1/400 and 400.

4. Composition according to one of claims 1, 2 or 3, characterized in that the fungicide b) is a broad-spectrum fungicide of the family of dithiocarbamic acid or dicarboximide derivatives.

5. Composition according to claim 4, characterized in that the fungicide is chosen from captan or thiram or maneb.

6. Composition according to one of claims 1, 2 or 3, characterized in that the fungicide b) is an anti-Fusarium fungicide.

7. Composition according to claim 6, characterized in that the fungicide is chosen from thiabendazole, imidazole, benomyl, prochloraz, carbendazim, fenpiclonil and imazalil.

8. Composition according to one of claims 1, 2 or 3, characterized in that the fungicide b) is an anti-Rhizoctonia fungicide.

9. Composition according to claim 8, characterized in that the fungicide b) is chosen from flutolanil, mepronil, iprodione, pencycuron or tolclofos-methyl.

10. Composition according to one of claims 1, 2 or 3, characterized in that the fungicide b) is an anti-Oomycetes fungicide.

11. Composition according to claim 10, characterized in that the fungicide is chosen from benalaxyl, furalaxyl, oxadixyl, etridiazole, fosetyl-Al, metalaxyl, hymexazol, phosphorous acid or one of its calcium or potassium salts.

12. Composition according to one of claims 1, 2 or 3, characterized in that the fungicide b) is an anti-Helminthosporium, anti-caries, anti-smut, anti-septorioses or anti-Fusarium fungicide.

13. Composition according to claim 12, characterized in that the fungicide b) is triazoxide, fenfuram, guazatine, iminoctadine dodecylbenzenesulphonate or ampropylfos.

14. Composition according to one of claims 1, 2 or 3, characterized in that the fungicide b) is an anti-Oidium fungicide.

15. Composition according to claim 14, characterized in that the fungicide b) is ethirimol, fenpropidin, fenpropimorph, tridemorph or 4-[3-(4-chlorophenoxyphenyl)-2-methylpropyl]-2,6-dimethylmorpholine.

16. Composition according to one of claims 1 to 15, characterized in that it contains, in addition, one or more insecticides c) which are suitable for the protection of the multiplication products.

17. Method for protecting the multiplication products (with the exception of germinated plants and young plants) and the plants resulting therefrom against fungal diseases, characterized in that the said multiplication products are coated with a fungicidal and non-phytotoxic amount of a composition according to one of claims 1 to 16.

18. Method according to claim 17, characterized in that the multiplication product is a seed.

19. Method according to claim 17, characterized in that the said seed is coated in the proportion of 1 to 400 g of fungicide a) and 1 to 400 g of fungicide b) per quintal of seeds.

20. Product resulting from the combination of the fungicide a), which is 2-(4-chlorobenzylidene)-5,5-dimethyl-1-(1H-1,2,4-triazol-1-ylmethyl)-1-cyclopentanol, and one or more fungicides b) and optionally one or more insecticides c) as in claims 1 to 16.

21. Multiplication product of plants, treated by a method according to one of claims 17 to 19.

22. Multiplication product according to claim 21, characterized in that it is a seed.

23. Multiplication product according to claim 22, characterized in that it comprises 1 to 400 g of fungicide a) and 1 to 400 g of fungicide b) per quintal of seeds.

## Patentansprüche

1. Fungizides Mittel, das vor allem zum Schutz der Produkte der Vermehrung von Kulturpflanzen bestimmt ist, enthaltend (a) 2-(4-Chlorbenzyliden)-5,5-dimethyl-1-(1H-1,2,4-triazol-1-ylmethyl)-1-cyclopentanol, (b) ein oder mehrere Fungizide, die für den Schutz der genannten Produkte der Vermehrung geeignet sind, einen in der Landwirtschaft annehmbaren inerten Träger und gegebenenfalls ein in der Landwirtschaft annehmbares grenzflächenaktives Mittel.

2. Mittel nach Anspruch 1, dadurch gekennzeichnet, daß das Produkt der Vermehrung ein Korn ist.

3. Mittel nach Anspruch 1, dadurch gekennzeichnet, daß das Gewichtsverhältnis des Fungizids a) 2-(4-Chlorbenzyliden)-5,5-dimethyl-1-(1H-1,2,4-triazol-1-ylmethyl)-1-cyclopentanol zu dem/den Fungizid/en b) im Bereich von 1/400 und 400 liegt.

4. Mittel nach einem der Ansprüche 1, 2 oder 3, dadurch gekennzeichnet, daß das Fungizid b) ein Fungizid mit breitem Wirkungsspektrum aus der Familie der Derivate der Dithiocarbaminsäure oder der Dicarboxinide ist.

5. Mittel nach Anspruch 4, dadurch gekennzeichnet, daß das Fungizid unter Captan oder Thiram oder Maneb ausgewählt ist.

6. Mittel nach einem der Ansprüche 1, 2 oder 3, dadurch gekennzeichnet, daß das Fungizid b) ein anti-Fusarium-Fungizid ist.

7. Mittel nach Anspruch 6, dadurch gekennzeichnet, daß das Fungizid aus Thiabendazol, Imidazol, Benomyl, Prochloraz, Carbendazim, Fenpiclonil und Imazalyl ausgewählt ist.

8. Mittel nach einem der Ansprüche 1, 2 oder 3, dadurch gekennzeichnet, daß das Fungizid b) ein anti-Rhizoctonia-Fungizid ist.

9. Mittel nach Anspruch 8, dadurch gekennzeichnet, daß das Fungizid b) aus Fluotolanil, Mepronil, Iprodion, Pencycuron oder Tolclophos-methyl ausgewählt ist.

10. Mittel nach einem der Ansprüche 1, 2 oder 3, dadurch gekennzeichnet, daß das Fungizid b) ein anti-Oomyceten-Fungizid ist.

11. Mittel nach Anspruch 10, dadurch gekennzeichnet, daß das Fungizid aus Benalaxyl, Furalaxyl, Oxadixyl, Etridiazol, Phosethyl-al, Metalaxyl, Hymexazol, phosphoriger Säure oder eines ihrer Calcium- oder Kaliumsalze ausgewählt ist.

12. Mittel nach einem der Ansprüche 1, 2 oder 3, dadurch gekennzeichnet, daß das Fungizid b) ein Fungizid gegen Helminthosporium, Fäule, Brand, Septoriose oder Fusarium ist.

13. Mittel nach Anspruch 12, dadurch gekennzeichnet, daß das Fungizid b) Triazoxid, Fenfuram, Guazatin, Iminoctadiendodexylbenzolsulfonat oder Ampropylfos ist.

14. Mittel nach einem der Ansprüche 1, 2 oder 3, dadurch gekennzeichnet, daß das Fungizid b) ein anti-Oidium-Fungizid ist.

15. Mittel nach Anspruch 14, dadurch gekennzeichnet, daß das Fungizid b) Ethirimol, Fenpropidin, Fenpropimorph, Tridemorph oder 4-[3-(Chlorphenoxyphenyl)-2-methylpropyl]-2,6-dimethylmorpholin ist.

16. Mittel nach einem der Ansprüche 1 bis 15, dadurch gekennzeichnet, daß es zusätzlich eines oder mehrere Insektizide c) enthält, die für den Schutz der Produkte der Vermehrung geeignet sind.

17. Verfahren zum Schützen der Produkte der Vermehrung (ausgenommen Keimlinge und junge Pflanzen) und der daraus resultierenden Pflanzen gegen Pilzkrankheiten, dadurch gekennzeichnet, daß man die genannten Produkte der Vermehrung mit einer fungiziden und nicht phytotoxischen Menge eines Mittels nach einem der Ansprüche 1 bis 16 überzieht.

18. Verfahren nach Anspruch 17, dadurch gekennzeichnet, daß das Produkt der Vermehrung ein Korn ist.

19. Verfahren nach Anspruch 17, dadurch gekennzeichnet, daß das Korn in einer Menge von 1 bis 400 g Fungizid a) und 1 bis 400 g Fungizid b) je 100 kg Korn bzw. Saatgut behandelt wird.

20. Produkt, resultierend aus der Kombination des Fungizids a), dem 2-(4-Chlorbenzyliden)-5,5-dimethyl-1-(1H-1,2,4-triazol-1-ylmethyl)-1-cyclopentanol, und einem oder mehreren Fungiziden b) und gegebenenfalls einem oder mehreren Insektiziden c) gemäß den Ansprüchen 1 bis 16.

21. Produkt der Vermehrung von Pflanzen, behandelt gemäß einem Verfahren nach einem der Ansprüche 17 bis 19.

22. Produkt der Vermehrung nach Anspruch 21, dadurch gekennzeichnet, daß es ein Korn ist.

23. Produkt der Vermehrung nach Anspruch 22, dadurch gekennzeichnet, daß es 1 bis 400 g Fungizid a) und 1 bis 400 g Fungizid b) je 100 kg Saatgut enthält.
